# EUROPEAN PATENT SPECIFICATION

(11) **EP 2 172 713 B1**
(45) Date of publication and mention of the grant of the patent: **27.03.2019**
(21) Application number: 08765752.4
(22) Date of filing: 19.06.2008
(51) Int. Cl.: B01D 46/42, F24F 3/16, F24F 12/00, F28D 9/00, F24F 11/00, F24F 11/77, F24F 11/30

(54) **VENTILATION DEVICE AND METHOD OF CONTROLLING THE SAME**
LÜFTUNGSVORRICHTUNG UND STEUERVERFAHREN DAFÜR
DISPOSITIF DE VENTILATION ET PROCÉDÉ DE COMMANDE DE CELUI-CI

(30) Priority: 20.06.2007 JP 2007162501
(43) Date of publication of application: 07.04.2010
(73) Proprietor: Daikin Industries, Ltd., Osaka 530-8323 (JP)
(72) Inventor: TAKEUCHI, Nobumasa, Sakai-shi Osaka 591-8511 (JP); MATSUGI, Yoshitaka, Sakai-shi Osaka 591-8511 (JP)
(74) Representative: Goddar, Heinz J.
(86) International application number: PCT/JP2008/061197
(87) International publication number: WO 2008/156131

(56) References cited:
- EP-A1- 1 296 098
- CN-A- 1 948 840
- JP-A- 10 119 564
- JP-A- 63 156 967
- JP-A- 2000 210 518
- JP-A- 2001 124 382
- JP-A- 2001 124 382
- JP-A- 2003 322 380
- JP-B2- 3 752 746
- US-A- 5 762 667

## Description

### TECHNICAL FIELD

The present invention relates to a ventilating apparatus and a method of controlling the same, and more particularly relates to a ventilating apparatus that comprises a blower fan and a filter, which collects dust and the like contained in an air flow generated by the blower fan, and to a method of controlling the same.

### BACKGROUND ART

In buildings, such as sealed residences (kimitsu juutaku), a ventilating apparatus that comprises a blower fan and a filter, which collects dust and the like contained in an air flow generated by the blower fan, is provided. Furthermore, from the perspective of air quality inside the building, it is desirable in such a building to ensure a required minimum number of air changes. However, when ventilation is performed, the heat loss of the building increases, which leads to, a decrease in comfort because of temperature changes inside the building and an increase in the operating load of a cooling and heating apparatus. Consequently, in a ventilating apparatus of a building, it is preferable to constantly maintain the amount of ventilation at a required amount in order to both ensure the required amount of ventilation and to reduce heat loss caused by ventilation.

In addition, among blower apparatuses that comprise a blower fan and a filter, which collects dust and the like contained in an air flow generated by the blower fan, there is a blower apparatus, as described in Patent Document 1, that prevents a decrease in the flow rate of the blower fan by detecting the degree of clogging of dust and the like in the filter and increasing the operation frequency of the fan in accordance with that degree of clogging.

<Patent Document 1>
Japanese Unexamined Patent Application Publication No. 2001-1

A ventilating apparatus according to the preamble of claim 1 is disclosed in document JP 2001 124382.

### DISCLOSURE OF THE INVENTION

When a ventilating apparatus that is provided to a building is operated, ventilation resistance increases because of the adherence of dust and the like to the filter. Therefore, if the rotational speed of a fan is controlled such that it is constantly maintained at a target rotational speed, then it becomes impossible to maintain the amount of ventilation in the initial phase of operation. In turn, the amount of ventilation decreases and, as a result, disadvantageously it becomes impossible to constantly maintain the amount of ventilation at the required amount of ventilation.

In contrast, similar to the blower apparatus in Patent Document 1, it is conceivable to provide a control configuration that increases the operation frequency of the blower fan in response to an increase in the degree of clogging of the filter. However, if such a control configuration is adopted, then unfavorably there is a risk that a continuous increase in the operation frequency of the blower fan will cause the operation of the blower fan to become overloaded. In addition, determining the frequency with which the target rotational speed of the blower fan is increased requires consideration of the fact that the extent to which the degree of clogging of the filter increases varies with the working environment of the ventilating apparatus, and making that determination is not easy.

An object of the present invention is to provide a ventilating apparatus that comprises a blower fan and a filter, wherein, even if the filter becomes clogged, it is possible to prevent the operation of the blower fan from overloading and to prevent, as much as possible, the amount of ventilation from decreasing.

In order to achieve this object a ventilating apparatus according to claim 1 and a method according to claim 4 is provided.

In the ventilating apparatus, the target rotational speed of the blower fan is increased with the prescribed frequency; consequently, even if the filter becomes clogged, it is possible to prevent, as much as possible, the amount of ventilation from decreasing. Here, the prescribed frequency for increasing the target rotational speed of the blower fan is determined using the time input value of filter sign and, consequently, is an appropriate frequency that takes into consideration the impact caused by the working environment of the ventilating apparatus. Moreover, it is possible to detect, via the filter sign output when the time input value is reached, a risk that the operation of the blower fan will become overloaded, which makes it possible to prevent operation from overloading. Furthermore, the "filter sign" is a function that reports, via a reporting unit such as a lamp indicator or a buzzer sound, the point in time when it is expected that the filter will become clogged to an extent that requires replacement or cleaning (i.e., the timing for performing maintenance of the filter) based on the fact that the operation time has reached the time input value set in the control unit and the like beforehand.

A ventilating apparatus according the invention is a ventilating apparatus wherein the control unit does not increase the target rotational speed after the filter sign is output.

In this ventilating apparatus, the target rotational speed is not increased after the filter sign is output; consequently, it is possible to reliably prevent the operation of the blower fan from overloading, even if operation is not stopped for the purpose of maintaining the filter and the operation of the blower fan continues even after the filter sign is output.

A ventilating apparatus according to claim 2 is a ventilating apparatus wherein the prescribed frequency is a time interval that is obtained by dividing the time input value by a prescribed integer.

In this ventilating apparatus, the prescribed frequency for increasing the target rotational speed is the time interval obtained by dividing the time input value by the prescribed integer; consequently, it is possible to both easily and appropriately determine, in accordance with the time input value of the filter sign, the prescribed frequency for increasing the target rotational speed.

A ventilating apparatus according to claim 3 is a ventilating apparatus wherein the time input value can be set to a time when maintenance of the filter is to be performed.

In this ventilating apparatus, the time input value of the filter sign can be set to the time when maintenance of the filter is to be performed. Consequently, the time input value of the filter sign can be set to an appropriate value in accordance with the degree of clogging of the filter at the point in time when the filter sign is output (namely, in accordance with the working environment of the ventilating apparatus). Thereby, it is possible to reliably prevent the amount of ventilation from decreasing and the operation from overloading. Furthermore, the text "SET" used in relation to the "time input value" does not merely mean inputting or changing of the time input value in the control unit and the like, but rather means the selection of one of the plurality of time input values prepared in advance in the control unit and the like. The text "SET" used in relation to the "time input value" is the same as the text "SET" used in the explanation of the ventilating apparatus according to the first through third aspects of the invention discussed above and the text "SET" used in the explanation of the method of controlling the ventilating apparatus according to the fifth aspect of the invention discussed below.

A method of controlling a ventilating apparatus is defined in claim 4.

In this method of controlling the ventilating apparatus, the target rotational speed of the blower fan is increased at the prescribed frequency; consequently, even if the filter becomes clogged, it is possible to prevent, as much as possible, the amount of ventilation from decreasing. Here, the prescribed frequency for increasing the target rotational speed of the blower fan is determined using the time input value of the filter sign and, consequently, is an appropriate frequency that takes into consideration the impact caused by the working environment of the ventilating apparatus. Moreover, it is possible to detect, via the filter sign output when the time input value is reached, the risk that the operation of the blower fan will become overloaded, which makes it possible to prevent the operation from overloading. Furthermore, the "filter sign" reports, via the reporting unit such as the lamp indicator or the buzzer sound, the point in time at which it is anticipated that the filter will have clogged to a degree that requires replacement or cleaning (i.e., the time when maintenance of the filter is to be performed) based on the fact that the operation time has reached the time input value set beforehand in the control unit and the like.

### BRIEF DESCRIPTION OF THE DRAWINGS

FIG. 1 is a schematic configuration diagram of a ventilating apparatus according to one embodiment of the present invention.
FIG. 2 is a perspective view showing the principal parts of a heat exchanger.
FIG. 3 is a flow chart showing a method of controlling the ventilating apparatus.
FIG. 4 is a graph showing the flow rate versus static pressure characteristics of an air supply fan and an exhaust fan.
FIG. 5 is a graph showing the time dependent change in the flow rate of the air supply fan and the exhaust fan.

### EXPLANATION OF THE REFERENCE NUMERALS

- 1: Ventilating apparatus
- 4: Air supply fan (blower fan)
- 5: Exhaust fan (blower fan)
- 6, 7: Filters
- 8: Control unit

### BEST MODE FOR CARRYING OUT THE INVENTION

The embodiments of a ventilating apparatus and a method of controlling the same according to the present invention will now be explained, based on the drawings.

### (1) Basic Configuration of the Ventilating Apparatus

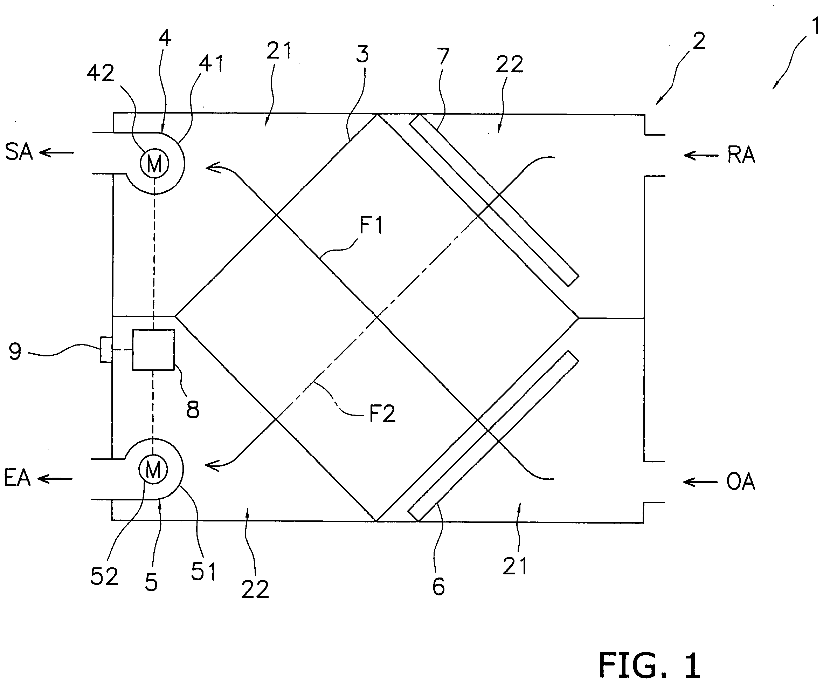

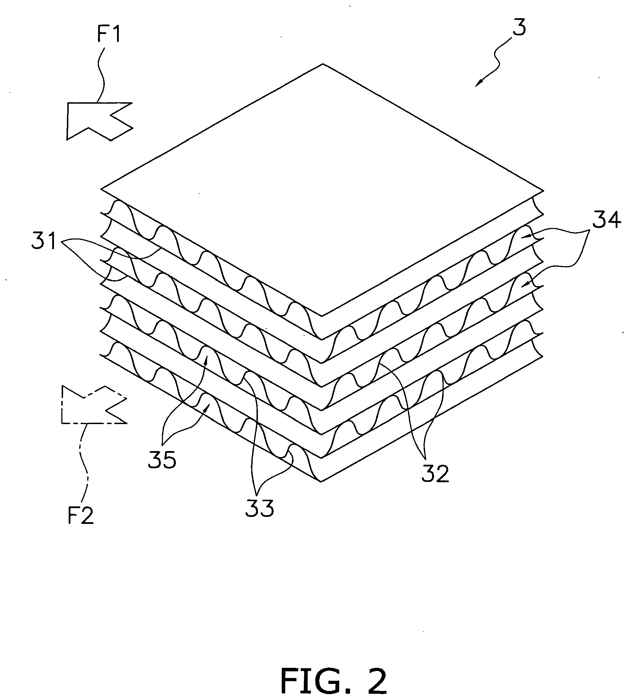

FIG. 1 is a schematic configuration diagram of a ventilating apparatus 1 according to one embodiment of the present invention. FIG. 2 is a perspective view showing the principal parts of a heat exchanger 3.

The ventilating apparatus 1 is installed, for example, on a wall, on the floor, on the ceiling, behind a wall, below the floor, or behind the ceiling in a building, such as a sealed residence (kimitsu juutaku). Furthermore, the ventilating apparatus 1 comprises an apparatus main body 2 is connected via ducts and the like to: an inlet port (not shown) for taking outdoor air into an indoor space as outdoor air OA; an air supply port (not shown) for supplying the outdoor air OA to the indoor space as supplied air SA; an outlet port (not shown) for taking the indoor air (hereinafter, referred to as indoor air RA) out of the indoor space; and a discharge port (not shown) for exhausting the indoor air RA to the outdoor space as exhaust air EA.

The interior of the apparatus main body 2 is provided with the heat exchanger 3 and is formed such that two air passageways 21, 22, which are partitioned off from one another, pass through the heat exchanger 3. The air passageway 21 comprises an air supply path, one end of the air passageway 21 is connected to the inlet port discussed above and the other end of the air passageway 21 is connected to the air supply port discussed above, that serves to flow an air flow F1 (refer to the arrow indicated by the solid line in FIG. 1) from the outdoor space toward the indoor space. The air passageway 22 comprises an exhaust path, one end of the air passageway 22 is connected to the outlet port discussed above and the other end of the air passageway 22 is connected to the exhaust port discussed above, that serves to flow an air flow F2 (refer to the arrow indicated by the chain line in FIG. 1) from the indoor space toward the outdoor space.

In the present embodiment, the heat exchanger 3 is a total heat exchanging unit that simultaneously exchanges the sensible heat and the latent heat between the two air flows (here, the air flow F1 and the air flow F2). The heat exchanger 3 principally comprises a plurality of total heat exchanging elements 31, a plurality of first spacer members 32, and a plurality of second spacer members 33. The total heat exchanging elements 31 are moisture permeable, flat plate shaped members, and are disposed spaced apart such that a plurality of first passageways 34, wherethrough the air flow F1 flows, and a plurality of second passageways 35, wherethrough the air flow F2 flows, are formed alternately. Each of the first spacer members 32 is a corrugated plate shaped member and is disposed such that it contacts and maintains the spacing between both of the total heat exchanging elements 31 of one pair thereof, which face one another and sandwich each of the first passageways 34. Similar to the first spacer members 32, each of the second spacer members 33 is a corrugated plate shaped member and is disposed such that it contacts and maintains the spacing between both of the total heat exchanging elements 31 of one pair thereof, which face one another and sandwich each of the second passageways 35. In the present embodiment, the first spacer members 32 and the second spacer members 33 are disposed such that they are orthogonal to one another, the first passageways 34 and the second passageways 35 are disposed such that they are orthogonal to one another. The air flow F1 and the air flow F2 are oriented such that they flow in directions that intersect one another. Thus, the plurality of first passageways 34, which constitute a part of the air supply path 21, and the plurality of second passageways 35, which constitute a part of the exhaust path 22, are formed alternately in the heat exchanger 3 by stacking a plurality of layers, each layer comprising a plurality of the total heat exchanging elements 31 and the spacer members 32, 33. Thereby, the ventilating apparatus 1 is configured such that the sensible heat and the latent heat between the airflow F1 and the airflow F2 can be exchanged simultaneously.

In addition, an air supply fan 4, which serves as a blower fan for generating the air flow F1 from the outdoor space toward the indoor space, is provided in the air supply path 21, and an exhaust fan 5, which serves as a blower fan for generating the air flow F2 from the indoor space toward the outdoor space, is provided in the exhaust path 22. In the present embodiment, the air supply fan 4 and the exhaust fan 5 are each disposed on the downstream side of the heat exchanger 3. The air supply fan 4 principally comprises an air supply fan main body 41, such as an impeller, and an air supply fan motor 42. The exhaust fan 5 principally comprises an exhaust fan main body 51, such as an impeller, and an exhaust fan motor 52. Thereby, the ventilating apparatus 1 is configured such that it is possible to perform ventilation by both supplying the air flow F1 from the outdoor space toward the indoor space using the air supply fan 4 and exhausting the air flow F2 from the indoor space toward the outdoor space using the exhaust fan 5.

In addition, an air supply filter 6, which collects dust and the like contained in the air flow F1 generated by the air supply fan 4, is provided in the air supply path 21, and an exhaust filter 7, which collects dust and the like contained in the air flow F2 generated by the exhaust fan 5, is provided in the exhaust path 22. In the present embodiment, the air supply filter 6 and the exhaust filter 7 are each disposed on the upstream side of the heat exchanger 3. Thereby, the ventilating apparatus 1 is configured such that it is possible to eliminate dust and the like contained in the air flow F1 supplied by the air supply fan 4 from the outdoor space toward the indoor space and in the air flow F2 exhausted by the exhaust fan 5 from the indoor space toward the outdoor space.

Furthermore, to constantly maintain the amount of ventilation at a required amount of ventilation, the ventilating apparatus 1 can perform control such that a rotational speed n of the air supply fan motor 42 of the air supply fan 4 and of the exhaust fan motor 52 of the exhaust fan 5 is constantly maintained at a target rotational speed ns. Specifically, the apparatus main body 2 is provided with a control unit 8, which comprises an electrical circuit, a microcomputer, and a memory for controlling the various equipment that constitutes the ventilating apparatus 1. By changing the operation frequency of each of the fan motors 42, 52, the voltage applied to each of the fan motors 42, 52, and the like, the control unit 8 can perform control such that the rotational speed n of the fan motors 42, 52 is constantly maintained at the target rotational speed ns. Furthermore, in the present embodiment, the target rotational speed ns of each of the fan motors 42, 52 can be changed in multiple stages (e.g., target rotational speeds ns1, ns2, ns3...).

### (2) Configuration Unique to the Ventilating Apparatus of the Present Embodiment and Operation Thereof

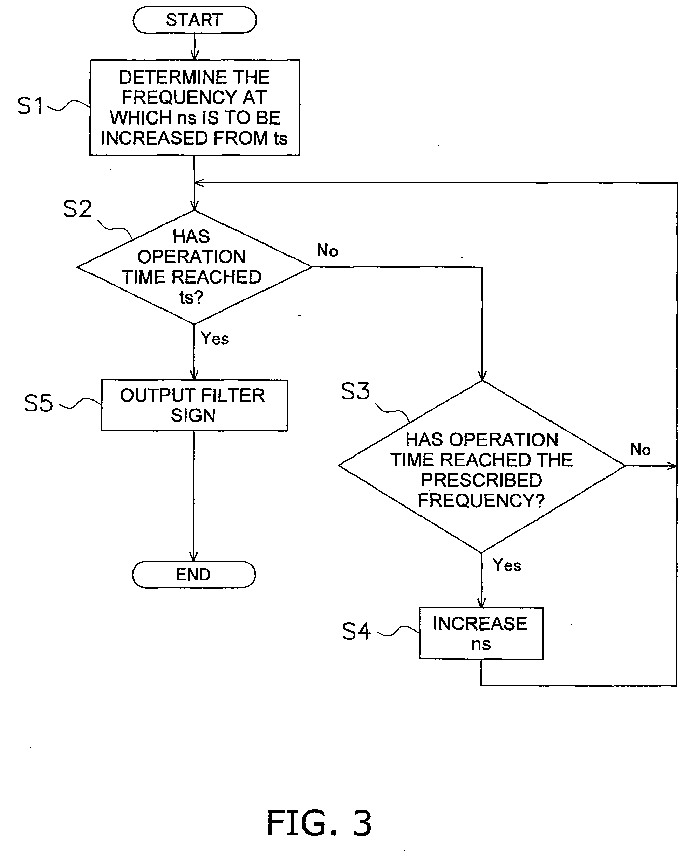

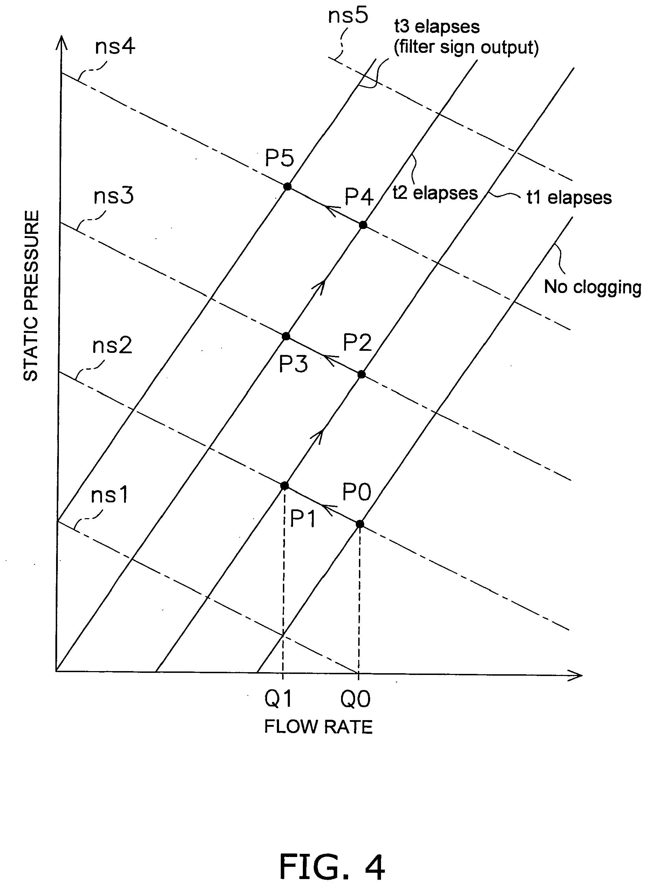

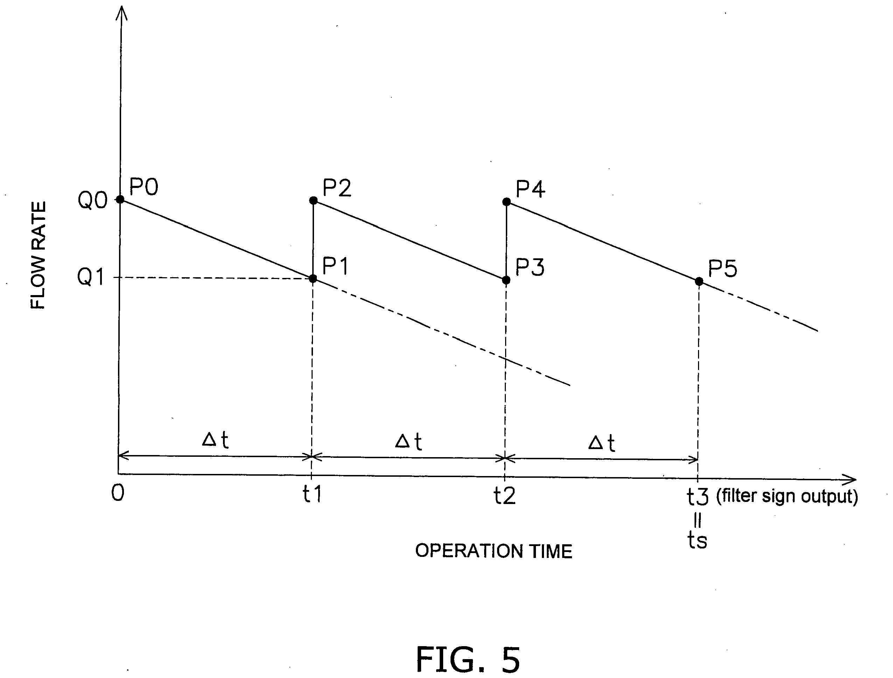

FIG. 3 is a flow chart showing a method of controlling the ventilating apparatus 1. FIG. 4 is a graph showing the flow rate versus the static pressure characteristics of the air supply fan 4 and the exhaust fan 5. FIG. 5 is a graph showing the time dependent change in the flow rates of the air supply fan 4 and the exhaust fan 5.

When the ventilating apparatus 1, which has the configuration discussed above, is operated, the filters 6, 7 provided to the apparatus main body 2 become clogged because of the adherence of dust and the like to the filters 6, 7. Consequently, ventilation resistance increases (i.e., the static pressure in the air supply fan 4 and in the exhaust fan 5 increases). Therefore, if the rotational speed n of the air supply fan motor 42 and the exhaust fan motor 52 is controlled such that it is constantly maintained at the target rotational speed ns, then the flow rates of the air supply fan 4 and the exhaust fan 5 (i.e., the flow rates of the air flows F1, F2 in FIG. 1) decrease and it becomes impossible to maintain the amount of ventilation in the initial phase of operation. Consequently, the amount of ventilation decreases and, as a result, it becomes impossible to constantly maintain the amount of ventilation at the required amount of ventilation. For example, in FIG. 4 and FIG. 5, if we assume the case wherein the target rotational speed ns in the initial phase of operation is set to ns2, then the flow rates of the air supply fan 4 and the exhaust fan 5 are given as a flow rate Q0, which corresponds to a point P0 (here, the flow rate Q0 corresponds to a flow rate that is greater than or equal to the required amount of ventilation). However, with the passage of operation time, the filters 6, 7 gradually become clogged and the static pressure in the air supply fan 4 and in the exhaust fan 5 increases. As a result, at a time t1, the flow rate of the air supply fan 4 and the exhaust fan 5 decreases to a flow rate Q1, which corresponds to a point P1 (here, the flow rate Q1 also corresponds to a flow rate that is greater than or equal to the required amount of ventilation). When operation time further passes, the flow rates of the air supply fan 4 and the exhaust fan 5 fall below the flow rate that corresponds to the required amount of ventilation, as shown by the portion on the left side of the point P1 on the line of the rotational speed ns2 in FIG. 4 and the chain double-dashed line that extends on the low flow rate side of the line that connects the point P0 and the point P1 in FIG. 5.

In contrast, in response to the increase in the degree of clogging of the filters 6, 7, it is conceivable to prevent a decrease in the flow rates of the air supply fan 4 and the exhaust fan 5 by increasing the target rotational speed ns of the air supply fan motor 42 and the exhaust fan motor 52. However, merely increasing the target rotational speed ns of the air supply fan motor 42 and the exhaust fan motor 52 will lead to high static pressure and high flow rate operating conditions in the air supply fan 4 and the exhaust fan 5. As a result, unfavorably there is a risk that operation of the air supply fan 4 and the exhaust fan 5 will become overloaded. In addition, since determining the frequency with which the target rotational speed ns of the air supply fan motor 42 and the exhaust fan motor 52 is increased requires consideration of the fact that the extent to which the degree of clogging of the filters 6, 7 increases varies with the working environment of the ventilating apparatus 1, making that determination is not easy.

Accordingly, the ventilating apparatus 1 of the present embodiment is provided with a function (hereinbelow, referred to as a filter sign) that, with the object of reporting the time at which the filters 6, 7 must be replaced or cleaned (namely, the point in time at which it is anticipated that clogging will occur to a degree that requires replacement or cleaning of the filters 6, 7), reports to a reporting unit 9 that an operation time t, which is set in, for example, the memory of the control unit 8 in advance, has reached a time input value ts. Here, the reporting unit 9 turns on a lamp indicator, sounds a buzzer, or the like, and may be provided to the apparatus main body 2, as in the present embodiment; in addition, if the ventilating apparatus 1 comprises a remote control for operation, then the reporting unit 9 may be provided to the remote control.

Furthermore, the ventilating apparatus 1 of the present embodiment adopts the controlling method explained below, wherein such a filter sign is used. Therefore, even if the filters 6, 7 become clogged, it is possible to prevent the operation of the air supply fan 4 and the exhaust fan 5 from overloading and to prevent, as much as possible, the amount of ventilation from decreasing.

First, in step S1, the control unit 8 determines a prescribed frequency at which the target rotational speed ns of the air supply fan motor 42 and the exhaust fan motor 52 is to be increased starting from the filter sign time input value ts. Here, in the present embodiment, the time input value ts of the filter sign is set when the apparatus main body 2 is shipped from a plant or installed on site by selecting one of a plurality of values (e.g., time input values ts1, ts2, ts3,...), which are set up in advance in the control unit 8, taking the working environment of the ventilating apparatus 1 into consideration. For example, if the time input values are related by the expression ts1 > ts2 > ts3, ..., then ts1 is set as the time input value ts if the ventilating apparatus 1 is used in an environment wherein the filters 6, 7 tend not to clog, and ts2 or ts3 is set as the time input value ts if the ventilating apparatus 1 is used in an environment wherein the filters 6, 7 tend to clog. Furthermore, a time interval Δt, which is calculated by dividing the time input value ts by a prescribed integer N, serves as the prescribed frequency at which the target rotational speed ns of the air supply fan motor 42 and the exhaust fan motor 52 is to be increased. Here, the prescribed integer N is a value that is calculated by adding one to the number of times that the target rotational speed ns is increased. For example, if the number of times that the target rotational speed ns is increased is 2, then the prescribed integer N is calculated by adding 1 to that count, i.e., 3; furthermore, dividing the time input value ts by the prescribed integer N makes it possible to obtain the time interval Δt = ts/3. Furthermore, if the time input value ts is set to a comparatively long time (e.g., ts1), then the prescribed frequency (i.e., the time interval Δt) determined using the time input value ts is correspondingly set to a comparatively long time interval; in addition, if the time input value ts is set to a comparatively short time (e.g., ts3), then the prescribed frequency is correspondingly set to a comparatively short time interval. Consequently, similar to the time input value ts of the filter sign, an appropriate value that also takes into consideration the impact of the working environment of the ventilating apparatus 1 can be easily obtained merely by performing the simple calculation of dividing the filter sign time input value ts of the filter sign by the prescribed integer N.

Next, in step S2, the control unit 8 determines whether the operation time of the ventilating apparatus 1 has reached the time input value ts. Furthermore, if the control unit 8 determines that the operation time has not reached the time input value ts, then the method transitions to the process in step S3. Furthermore, in step S3, the control unit 8 determines whether the operation time has reached the prescribed frequency (more specifically, a time that is an integer multiple of the time interval Δt). Furthermore, if the control unit 8 determines that the operation time has not reached the prescribed frequency, then the processes of steps S2, S3 are repeated. In addition, if the control unit 8 determines in step S3 that the operation time has reached the prescribed frequency, then the method transitions to the process in step S4. Furthermore, after increasing the target rotational speed ns of the air supply fan motor 42 and the exhaust fan motor 52, the method transitions to the process in step S2. Thus, the control unit 8 performs control wherein the target rotational speed ns of the air supply fan motor 42 and the exhaust fan motor 52 is increased by repeating the processes in the steps S2, S3, S4 as the operation time passes. In addition, in step S2, if the control unit 8 determines that the operation time has reached the time input value ts, then the method transitions to step S5 and the control unit 8 outputs the filter sign via the reporting unit 9, whereupon the processes in steps S1 through S5 end. Furthermore, after the filter sign is output, the control unit 8 transitions to the state wherein it does not increase the target rotational speed ns of the air supply fan motor 42 and the exhaust fan motor 52.

Here, the processes in steps S2 through S5 discussed above will be explained concretely (refer to FIG. 4 and FIG. 5) taking as an example a case wherein, in step S1, the number of times that the target rotational speed ns is increased is 2 (i.e., prescribed integer N = 3 and time interval Δt = ts/3), the target rotational speed ns of the air supply fan motor 42 and the exhaust fan motor 52 is set to the rotational speed ns2, which corresponds to the flow rate Q0, and operation is started.

First, the control unit 8 performs control such that the target rotational speed ns is constantly maintained at the rotational speed ns2 by repeating the processes of steps S2, S3 until the first time interval Δt since the start of operation of the ventilating apparatus 1 (i.e., the time t1 since the start of operation) elapses. At this time, the filters 6, 7 clog because of the adhesion of dust and the like thereto, which leads to an increase in the static pressure in the air supply fan 4 and in the exhaust fan 5. Consequently, the flow rates of the air supply fan 4 and the exhaust fan 5 (i.e., the flow rates of the air flows F1, F2 in FIG. 1) gradually decrease from the flow rate Q0 (here, the flow rate Q0 corresponds to a flow rate that is greater than or equal to the required amount of ventilation), which corresponds to the point P0, and reaches the flow rate Q1 (here, the flow rate Q1 corresponds to a flow rate that is greater than or equal to the required amount of ventilation), which corresponds to the point P1. At the point in time when the first time interval Δt since the start of operation of the ventilating apparatus 1 (i.e., the time t1 since the start of operation) is reached.

Furthermore, when the first time interval Δt since the start of operation of the ventilating apparatus 1 (i.e., the time t1 since the start of operation) elapses, the control unit 8 transitions from the process of step S3 to the process of step S4 and performs control wherein the target rotational speed ns is increased from the rotational speed ns2 to the rotational speed ns3. At this time, the flow rates of the air supply fan 4 and the exhaust fan 5 increase from the flow rate Q1 that corresponds to the point P1 to a flow rate that correspond to a point P2 (here, in the vicinity of the flow rate Q0 in the initial phase of operation), and a decrease in the amount of ventilation is thereby prevented. Furthermore, as the target rotational speed ns increases, the static pressure in the air supply fan 4 and in the exhaust fan 5 likewise increases.

Next, the control unit 8 performs control such that the target rotational speed ns is constantly maintained at the rotational speed ns3 by repeating the processes of steps S2, S3 until the second time interval Δt since the first time interval Δt of the ventilating apparatus 1 was reached (i.e., a time t2 since the start of operation) elapses. At this time as well, the filters 6, 7 clog because of the adhesion of dust and the like, which leads to a further increase in the static pressure in the air supply fan 4 and in the exhaust fan 5. Consequently, the flow rates of the air supply fan 4 and the exhaust fan 5 gradually decrease from the flow rate that corresponds to the point P2 (here, in the vicinity of the flow rate Q0 in the initial phase of operation). Furthermore, a flow rate that corresponds to a point P3 (here, in the vicinity of the flow rate Q1 that corresponds to the point P1) is reached at the point in time when the second time interval Δt since the first time interval Δt of the ventilating apparatus 1 was reached (i.e., the time t2 since the start of operation) is reached.

Furthermore, when the second time interval Δt since the first time interval Δt of the ventilating apparatus 1 was reached (i.e., the time t2 since the start of operation) elapses, the control unit 8 transitions from the process of step S3 to the process of step S4 and performs control wherein the target rotational speed ns is further increased from the rotational speed ns3 to a rotational speed ns4. At this time, the flow rates of the air supply fan 4 and the exhaust fan 5 increase from the flow rate (here, in the vicinity of the flow rate Q1 that corresponds to the point P1) that corresponds to the point P3 to flow rates that correspond to the point P2 (here, in the vicinity of the flow rate Q0 in the initial phase of operation), and a decrease in the amount of ventilation is thereby prevented. Furthermore, as the target rotational speed ns increases, the static pressure in the air supply fan 4 and in the exhaust fan 5 likewise further increases.

Next, the control unit 8 performs control such that the target rotational speed ns is constantly maintained at the rotational speed ns4 by repeating the processes of steps S2, S3 until the third time interval Δt since the second time interval Δt of the ventilating apparatus 1 was reached (i.e., a time t3 since the start of operation) elapses. At this time as well, the filters 6, 7 clog because of the adhesion of dust and the like, which leads to a further increase in the static pressure in the air supply fan 4 and in the exhaust fan 5. Consequently, the flow rates of the air supply fan 4 and the exhaust fan 5 gradually decrease from a flow rate that corresponds to a point P4 (here, in the vicinity of the flow rate Q0 in the initial phase of operation). Furthermore, a flow rate that corresponds to a point P5 (here, in the vicinity of the flow rate Q1 that corresponds to the point P1) is reached at the point in time when the third time interval Δt since the second time interval Δt of the ventilating apparatus 1 was reached (i.e., the time t3 since the start of operation) is reached.

Furthermore, when the third time interval Δt since the second time interval Δt of the ventilating apparatus 1 was reached (i.e., the time t3 since the start of operation) elapses, the time t3 is equal to the time input value ts and, therefore, the control unit 8 transitions from the process of step S2 to the process of step S5, outputs the filter sign, and ends the processes of steps S1 through S5. Thereby, it is possible to detect the risk that the operation of the air supply fan 4 and the exhaust fan 5 will become overloaded attendant with the control wherein the target rotational speed ns is increased with the prescribed frequency, which makes it possible to prevent the operation from overloading. Moreover, after the output of the filter sign, the control unit 8 no longer performs control wherein the target rotational speed ns is increased and, consequently, even if the operation of the air supply fan 4 and the exhaust fan 5 were to be continued after the filter sign is output, the target rotational speed ns would not increase, thereby making it possible to reliably prevent the operation of the air supply fan 4 and the exhaust fan 5 from overloading.

Thus, in the ventilating apparatus 1 of the present embodiment, control is performed using the time input value ts of the filter sign to increase the target rotational speed ns of the air supply fan 4 and the exhaust fan 5 with an appropriate frequency that considers the impact of the working environment of the ventilating apparatus 1. Therefore, even if the filters 6, 7 become clogged, it is possible to maintain the flow rates of the air supply fan 4 and the exhaust fan 5 in a range between the flow rate Q0 and the flow rate Q1. Thereby, it is possible to prevent, as much as possible, a decrease in the amount of ventilation. Moreover, the risk that the operation of the air supply fan 4 and the exhaust fan 5 will overload is detected via the filter sign that is output when the time input value ts is reached and the target rotational speed ns is not increased after the filter sign is output. Consequently, even if operation is not stopped in order to perform maintenance of the filters 6, 7 and the operation of the air supply fan 4 and the exhaust fan 5 is continued even after the filter sign is output, it is still possible to reliably prevent the operation of the air supply fan 4 and the exhaust fan 5 from overloading.

In addition, in the ventilating apparatus 1 of the present embodiment, the time input value ts of the filter sign can be set to the time when maintenance of the filters 6, 7 is to be performed. Consequently, even if the time input value ts that was set when the apparatus main body 2 was shipped from the plant or when the apparatus main body 2 was installed was not appropriate-for example, in cases wherein the working environment of the ventilating apparatus 1 cannot be ascertained accurately when the apparatus main body 2 is shipped from a plant or when the apparatus main body 2 is installed or wherein the actual working environment of the ventilating apparatus 1 differs from that identified when the apparatus main body 2 was shipped from a plant or when the apparatus main body 2 was installed then, by measuring the flow rates and the like of the air supply fan 4 and the exhaust fan 5 at the point in time when the filter sign is output during the initial operation after the apparatus main body 2 is installed, it is possible to accurately ascertain the degree of clogging of the filters 6, 7, namely, the working environment of the ventilating apparatus 1, and thereby to reset the time input value ts when maintenance of the filters 6, 7 is to be performed to an appropriate value. Thereby, during operation after the time input value ts is reset, the filter sign can be output with appropriate timing and the prescribed frequency for increasing the target rotational speed ns of the air supply fan 4 and the exhaust fan 5 can be set appropriately, which makes it possible to reliably prevent a decrease in the amount of ventilation and to prevent operation from overloading.

Furthermore, the discussion above explained a method of control wherein control is performed collectively for both the air supply fan 4 and the exhaust fan 5, and consequently the flow rate versus static pressure characteristics, the time input value ts, the prescribed integer N for computing the prescribed frequency, and the like are the same for both of the fans 4, 5; moreover, the discussion above recites that both the fans 4, 5 are controlled jointly. But the present invention is not limited thereto; for example, the flow rate versus static pressure characteristics, the time input value ts, the prescribed integer N for computing the prescribed frequency, and the like may differ for the air supply fan 4 and the exhaust fan 5; in addition, the fans 4, 5 may be controlled separately.

### (3) Other Embodiments

The above explained embodiments of the present invention based on the drawings, but the specific constitution is not limited to these embodiments, and it is understood that variations and modifications may be effected without departing from the scope of the invention.
**(A)**
   In the embodiment discussed above, the time input value ts is set by selecting one of a plurality of values (e.g., the time input values ts1, ts2, ts3,...) prepared in advance in the control unit 8. But the present invention is not limited thereto; for example, the time input value ts may be input directly into the memory of the control unit 8.
**(B)**
   The embodiment discussed above explained an exemplary case wherein the present invention is adapted to the ventilating apparatus 1, which comprises the total heat exchanging unit (i.e., the heat exchanger 3) that simultaneously exchanges sensible heat and latent heat. But the present invention is not limited thereto; for example, the present invention may be adapted to a ventilating apparatus that has a sensible heat exchanger that exchanges only sensible heat. In addition, the present invention may be adapted to a ventilating apparatus that does not comprise a heat exchanger, but rather comprises a ventilating fan that includes a filter.
**(C)**
   The embodiment discussed above explained an exemplary case wherein the present invention is adapted to the ventilating apparatus 1 that comprises the apparatus main body 2, wherein the filters 6, 7 are respectively disposed on the upstream side of the air supply fan 4 and the exhaust fan 5, which serve as blower fans. But the present invention is not limited thereto; for example, the present invention may be adapted to a ventilating apparatus wherein the blower fans are disposed on the downstream side of the filters rather than the upstream side. In addition, the present invention may be adapted to a ventilating apparatus wherein the blower fans or the filters are not provided to the apparatus main body 2, but rather to ducts and the like whereto the apparatus main body 2 is connected.

### INDUSTRIAL APPLICABILITY

In a ventilating apparatus that comprises a blower fan and a filter, the use of the present invention makes it possible, even if the filter becomes clogged, to prevent the operation of the blower fan from overloading and, as much as possible, the amount of ventilation from decreasing.

## Claims

1. A ventilating apparatus (1), comprising:
a blower fan (4, 5);
a filter (6, 7), which collects dust and the like contained in an air flow generated by the blower fan; and
a control unit (8) to increase a target rotational speed of the blower fan with a prescribed frequency, **characterized in that** the control unit is configured to increase the target rotational speed of the blower fan with the prescribed frequency until the operation time of the ventilating apparatus has reached an input time value, to output a filter sign when the operation time of the ventilating apparatus has reached the input time value and to not increase the target rotational speed after the filter sign is output.

2. A ventilating apparatus (1) according to claim 1, wherein
the prescribed frequency is a time interval that is obtained by dividing the input time value by a prescribed integer.

3. A ventilating apparatus (1) according to claim 1 or 2, wherein
the input time value can be set to a time when maintenance of the filter (6, 7) is to be performed.

4. A method for controlling a ventilating apparatus, comprising the step of:
in a ventilating apparatus (1) that comprises a blower fan (4, 5) and a filter (6, 7), which collects dust and the like contained in an air flow generated by the blower fan, increasing a target rotational speed of the blower fan with a prescribed frequency, until the operation time of the ventilating apparatus has reached an input time value, outputting a filter sign when the operation time of the ventilating apparatus has reached the input time value and not increasing the target rotational speed after the filter sign is output.

## Patentansprüche

1. Lüftungsvorrichtung (1), umfassend:
ein Gebläse (4, 5);
einen Filter (6, 7), der Staub und dergleichen sammelt, der in einer vom Gebläse erzeugten Luftströmung enthalten ist; und
eine Steuereinheit (8) zum Erhöhen einer Zieldrehgeschwindigkeit des Gebläses mit einer vorgeschriebenen Frequenz, **dadurch gekennzeichnet, dass** die Steuereinheit konfiguriert ist, um die Zieldrehgeschwindigkeit des Gebläses mit der vorgeschriebenen Frequenz zu erhöhen, bis die Betriebszeit der Lüftungsvorrichtung einen eingegebenen Zeitwert erreicht hat, ein Filterzeichen auszugeben, wenn die Betriebszeit der Lüftungsvorrichtung den eingegebenen Zeitwert erreicht hat, und die Zieldrehgeschwindigkeit nicht zu erhöhen, nachdem das Filterzeichen ausgegeben ist.

2. Lüftungsvorrichtung (1) nach Anspruch 1, wobei die vorgeschriebene Frequenz ein Zeitintervall ist, das durch Teilen des eingegebenen Zeitwerts durch eine vorgeschriebene ganze Zahl erhalten ist.

3. Lüftungsvorrichtung (1) nach Anspruch 1 oder 2, wobei der eingegebene Zeitwert auf eine Zeit eingestellt werden kann, wenn eine Wartung des Filters (6, 7) durchgeführt werden soll.

4. Verfahren zur Steuerung einer Lüftungsvorrichtung, umfassend die Schritte:
in einer Lüftungsvorrichtung (1), die ein Gebläse (4, 5) und einen Filter (6, 7) aufweist, der Staub und dergleichen, der in einer von dem Gebläse erzeugten Luftströmung enthalten ist, sammelt, Erhöhen einer Zieldrehgeschwindigkeit des Gebläses mit einer vorgeschriebenen Frequenz, bis die Betriebszeit der Lüftungsvorrichtung einen eingegebenen Zeitwert erreicht hat, Ausgeben eines Filterzeichens, wenn die Betriebszeit der Lüftungsvorrichtung den eingegebenen Zeitwert erreicht hat, und Nichterhöhen der Zieldrehgeschwindigkeit, nachdem das Filterzeichen ausgegeben ist.

## Revendications

1. Appareil de ventilation (1) comprenant :
un ventilateur de soufflage (4, 5) ;
un filtre (6, 7) assurant la collecte de la poussière et autres matières présentes dans un débit d'air généré par le ventilateur de soufflage ; et
un module de commande (8) pour augmenter une vitesse de rotation cible du ventilateur de soufflage avec une fréquence prescrite,
**caractérisé en ce que** le module de commande est configuré pour accroître la vitesse de rotation ciblée du ventilateur de soufflage à la fréquence prescrite jusqu'à ce que le temps d'utilisation de l'appareil de ventilation ait atteint une valeur temporelle entrée, pour émettre un signe de filtre lorsque le temps d'utilisation de l'appareil de ventilation a atteint la valeur temporaire entrée et ne pas augmenter la vitesse de rotation cible après l'émission du signe de filtre.

2. Appareil de ventilation (1) selon la revendication 1, la fréquence prescrite étant un créneau temporel obtenu en divisant la valeur temporaire entrée par un nombre entier prescrit.

3. Appareil de ventilation (1) selon la revendication 1 ou 2, la valeur temporaire entrée pouvant être réglée sur une heure à laquelle l'entretien du filtre (6, 7) doit être effectué.

4. Méthode de commande d'un appareil de ventilation, comprenant l'étape suivante :
dans un appareil de ventilation (1) comprenant un ventilateur de soufflage (4, 5) et un filtre (6, 7), assurant la collecte de poussières et autres matières dans un débit d'air généré par le ventilateur de soufflage, augmentation d'une vitesse de rotation cible du ventilateur de soufflage avec une fréquence prescrite à une fréquence prescrite, jusqu'à ce que le temps d'utilisation de l'appareil de ventilation ait atteint une valeur temporelle entrée, émission d'un signe de filtre lorsque le temps d'utilisation de l'appareil de ventilation ait atteint la valeur temporaire entrée et absence d'augmentation de la vitesse de rotation cible après l'émission du signe de filtre.
